# EUROPEAN PATENT APPLICATION

(11) **EP 2 144 398 A1**
(43) Date of publication of application: **13.01.2010**
(21) Application number: 09008865.9
(22) Date of filing: 07.07.2009
(51) Int. Cl.: H04L 12/28, H04M 3/22

(54) **Method and apparatus for monitoring and logging communication sessions in a home network**

(30) Priority: 09.07.2008 US 170415
(71) Applicant: GENERAL INSTRUMENT CORPORATION, Horsham, Pennsylvania 19044 (US)
(72) Inventor: Chintada, Suresh Kumar, Bangalore Karnataka, 560093 (IN); Johnson, Gerald R., Cataumet, MA 02534 (US); Sethuramalingam, P., Bangalore Karnataka, 560032 (IN)
(74) Representative: Openshaw, Paul Malcolm

(57) **Abstract**

A method and apparatus for logging and monitoring communication sessions terminating and originating in a home network includes routing the communication session to a device (602) in the home network via a residential gateway (604). The residential gateway being equipped with Universal Plug and Play and Session Initiation Protocol capabilities (618). Another feature includes storing data related to the communication session in a database (614) coupled to the residential gateway (604).

## Description

### FIELD OF THE INVENTION

The present invention generally relates to home networking applications, and more particularly relates to the monitoring and logging of communications sessions in home networks.

### BACKGROUND OF THE INVENTION

Many modern homes include a variety of networked communication devices that have different device identities and user identities, and that communicate using different protocols (*e*.*g*., Voice over Internet Protocol (VoIP) telephones, personal computers, mobile telephones, etc.). It becomes very difficult, as the number and types of these devices increase, to monitor and manage all of the communication sessions terminating and originating inside the home.

Therefore, there is a need in the art for monitoring and logging communication sessions terminating and originating in a home network.

### BRIEF DESCRIPTION OF THE DRAWINGS

So that the manner in which the above recited embodiments of the invention are attained and can be understood in detail, a more particular description of the invention may be had by reference to the embodiments thereof which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a schematic diagram illustrating one embodiment of a system for bridging Session Initiation Protocol and Universal Plug and Play devices

FIG. 2 is a flow diagram illustrating one embodiment of a method for bridging Session Initiation Protocol and Universal Plug and Play devices;

FIG. 3 is a flow diagram illustrating a more detailed embodiment of a method for bridging Session Initiation Protocol and Universal Plug and Play devices;

FIG. 4 is a flow diagram illustrating a more detailed embodiment of a method for bridging Session Initiation Protocol and Universal Plug and Play devices;

FIG. 5 is a flow diagram illustrating one embodiment of a method for registering, locating and invoking a Universal Plug and Play service;

FIG. 6 is a schematic diagram illustrating a first embodiment of a network ;

FIG. 7 is a schematic diagram illustrating a second embodiment of a network;

FIG. 8 is a schematic diagram illustrating a third embodiment of a network;

FIG. 9 is a flow diagram illustrating one embodiment of a method for monitoring and logging communication sessions terminating in a home network; and

FIG. 10 is a high level block diagram of the present call monitoring and logging application that is implemented using a general purpose computing device.

To facilitate understanding, identical reference numerals have been used, where possible, to designate identical elements that are common to the figures.

### DETAILED DESCRIPTION

In one embodiment, the invention is a method and apparatus for logging and monitoring communication sessions terminating and originating in a home network. Embodiments of the invention enable a centralized home network device (such as a broadband residential gateway) to monitor, control, and log all communication sessions terminating and originating on home devices connected to the centralized device, thereby providing an integrated view of all communication sessions within the home network, regardless of the actual device(s) used to participate in the communication sessions. In a further embodiment, a dedicated device (such as a Universal Plug and Play (UPnP) remote control, a television/set top box combination, or a Session Initiation Protocol or (SIP)-based mobile telephone) connected to the centralized device presents an interface that allows a user to browse past communications sessions and initiate new communication sessions.

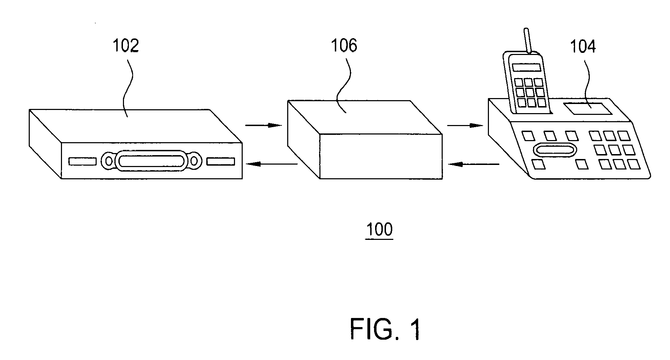

FIG. 1 is a schematic diagram illustrating one embodiment of a system 100 for bridging Session Initiation Protocol and Universal Plug and Play devices. In the illustrated embodiment, a legacy UPnP device 102 (*e*.*g*., an audio/visual server) and a legacy SIP device 104 (*e*.*g*., a cordless phone) communicate via a software bridge 106, for example embodied in a personal computer, a residential gateway, a cellular telephone, or in a dedicated, standalone device (*e*.*g*., a set top box). The software bridge 106 operates transparently. That is, the software bridge 106 makes the legacy SIP device 104 look transparent to the legacy UPnP device 102, and vice versa, so that the legacy SIP device 104 and the legacy UPnP device 102 operate as they normally would. Once the software bridge 106 is implemented, the legacy SIP device 104 and the legacy UPnP device 102 may communicate directly or communicate using the software bridge 106 as an intermediary.

As described in further detail below, the software bridge 106 relies on overloading the features of RFC 3261 SIP and on common applications. No additional protocol features, changes to the SIP specification or new application features are required for the software bridge 106 to successfully allow the legacy UPnP device 102 and the legacy SIP device 104 to communicate. As also discussed further below, the software bridge 106 enables the legacy UPnP device 102 to access session services by relaying session services offered by the legacy SIP device 104 to the UPnP network, thus facilitating bidirectional internetworking.

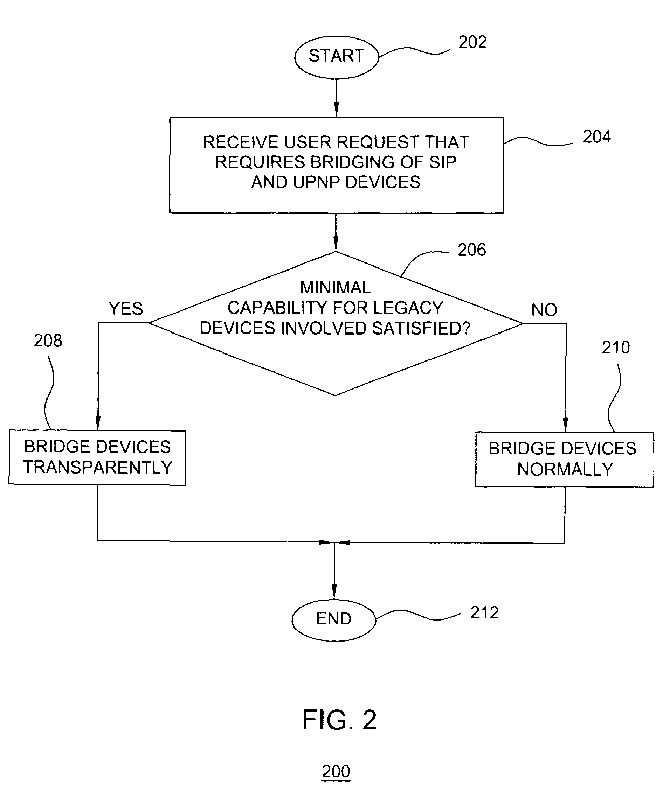

FIG. 2 is a flow diagram illustrating one embodiment of a method 200 for bridging Session Initiation Protocol and Universal Plug and Play devices. The method 200 thus illustrates the functionality of the transparent software bridge 106 illustrated in FIG. 1, and may therefore be implemented, for example, at a residential gateway or at a standalone accessory to an SIP device.

The method 200 is initialized at step 202 and proceeds to step 204, where the software bridge receives a user request that requires the bridging of at least one SIP device and at least one UPnP device. For example, the user may want to stream music from a UPnP-based home media server to an SIP cordless phone.

In step 206, the software bridge determines whether the minimal capability for legacy devices involved in the requested action in the request action is satisfied. As described above, a legacy SIP device is a single-mode device that only supports RFC3261 SIP features, and a legacy UPnP device is a single-mode device that only supports UPnP capabilities as specified by DLNA 1.0 guidelines.

If the software bridge concludes in step 206 that the minimal capability for the legacy devices involved in the requested action is not satisfied, the method 200 proceeds to step 210, and the software bridge bridges the devices normally (*e*.*g*., via a home gateway, SIP stack on UPnP device or UPnP stack on SIP device) before terminating in step 212.

Alternatively, if the software bridge concludes in step 206 that the minimal capability for the legacy devices involved in the requested action is satisfied, the method 200 proceeds to step 208, and the software bridge bridges the devices transparently (*i*.*e*., substantially without impact to the operation, behavior or configuration of the bridged devices) before the method 200 terminates in step 212.

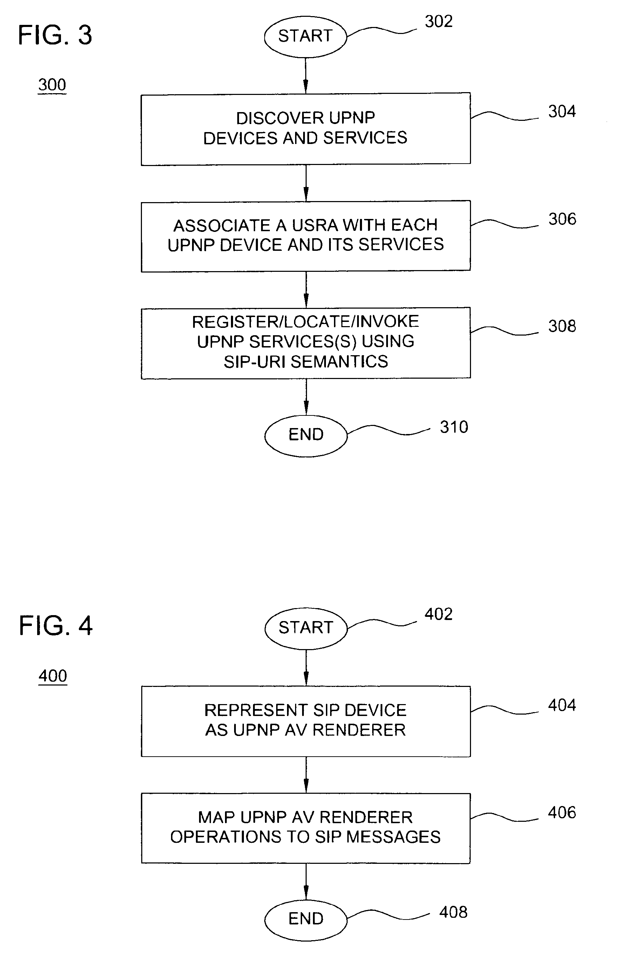

FIG. 3 is a flow diagram illustrating a more detailed embodiment of a method 300 for bridging Session Initiation Protocol and Universal Plug and Play devices. Like the method 200, the method 300 may be implemented in a software bridge embodied, for example, in a residential gateway or at a standalone accessory to an SIP device. The method 300 is specifically directed to enabling an SIP device to access UPnP services. Thus, for example, the method 300 may be implemented by a user in order to stream music from a UPnP-based home media server to an SIP cordless phone.

The method 300 is initialized at step 302 and proceeds to step 304, where the software bridge discovers UPnP devices and their services. Following discovery, the method 300 proceeds to step 306, and the software bridge associates a User Service Request Address (USRA) with each discovered UPnP device and the UPnP device's services. The USRA is a novel address format that reuses the format of the SIP Uniform Resource Identifier (URI), which enables standard RFC3261 SIP procedures to be used without making changes to the SIP or UPnP devices. However, where the SIP URI is used for addressing users (*e*.*g*., the users of services), the USRA is used to address services offered by a bridge. For example, abstract services (*e*.*g*., UPnP application handles, such as "StreamMusic") are mapped to executable UPnP actions or sequences of UPnP actions for use by SIP users, by reusing the SIP URI. In one embodiment, the USRA comprises a domain (*e*.*g*., the SIP domain "JohnsHome.net"), a device ID (*e*.*g*., "JohnPC") and a service ID (*e*.*g*., "StreamMusic").

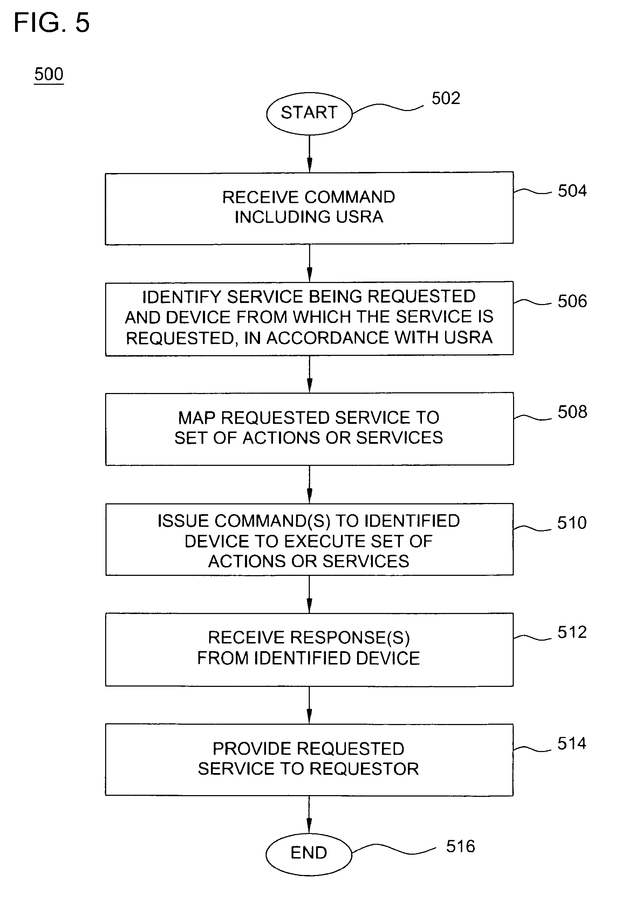

In step 308, the software bridge registers, locates and, invokes at least one UPnP service, using the semantics of the SIP-URI. Registering UPnP services (*e*.*g*., by making connections between UPnP services and SIP URIs) enables UPnP services to be accessed from an SIP domain using regular SIP ID's (*e*.*g*., SIP URIs). Registration also enables locating UPnP services (*e*.*g*., by determining where/to which domain to route commands), which in turn enables access to services. Invoking UPnP services involves determining which UPnP service a command is requesting and generating a set of actions to be carried out by the UPnP device hosting the UPnP service to be accessed. One embodiment of a method for registering, locating and invoking a UPnP service is illustrated in FIG. 5. Thus, the SIP-URI is used to register and locate UPnP services, rather than to register and locate users.

For example, in one embodiment, the "To" field of an RFC3261 SIP header is used in a REGISTER method, in order to allow the software bridge to specify a UPnP service that needs to be registered in the SIP domain. In particular, usage of the "To" field is "overloaded" to address or register a service offered by a bridge, by including a USRA referring to the service. Normally, the "To" field in a RFC3261 SIP header is used to address or register users, as described above.

For instance, say a user, John, would like to use his SIP device to stream a song stored in the default shared folder of his UPnP media server (hosted by a PC in John's room, with the UPnP friendly name "JohnPC"). Further assume that the software bridge has a service titled "StreamMusic" that supports this scenario. In this case, the software bridge would execute an SIP REGISTER with the "To" field of the RFC3261 SIP header set as "To: JohnPC.StreamMusic@JohnsHome.net", where "JohnsHome.net is the SIP domain that provides the "StreamMusic" service. The software bridge will recognize the UPnP device "JohnsPC" as a device that is allowed to communicate with SIP-based devices.

Alternatively, suppose John wants to use his SIP device to stream a video clip stored in the default shared folder of his digital video recorder (which has the UPnP friendly name "DVR"). Further assume that the software bridge has a service titled "StreamVideo" that supports this scenario. In this case, the software bridge would execute an SIP REGISTER with the "To" field of the RFC3261 SIP header set as "To: DVR.StreamVideo@JohnsHome.net".

In another embodiment, the "To" field of an RFC3261 SIP header is used in an INVITE method, in order to allow an SIP device to locate a UPnP service. This also allows the software bridge to implement the UPnP service in terms of the UPnP actions. Referring back to the example above, when John actually invokes a service from his SIP device, an SIP INVITE message with the "To" field set as described above is generated (*e*.*g*., "To: JohnPC.StreamMusic@JohnsHome.net" or "To: DVR.StreamVideo@JohnsHome.net"). The "To" field is used by the software bridge to determined and invoke the service. The software bridge will recognize the UPnP domain (*e*.*g*., "JohnsHome.net") as a place to communicate with SIP devices.

In yet another embodiment, the "To" field of an RFC3261 SIP header is used in an INVITE method message, in order to allow an SIP device to call media items or to receive particular files or services. This also allows system elements of the software bridge to understand the methods to use, determined by the media resource attributes. For example, if a .cal extension calendar resource were called, the software bridge would create a rendered image of the calendar, to be streamed to the SIP device. As another example, if a .wav extension resource, the software bridge would stream the music to the SIP device. In this case, the "StreamVideo" portion of the exemplary USRA is used by the software bridge to select streaming video from the UPnP device to be sent to the SIP device.

The method 300 then terminates in step 310.

The method 300 thus relies on the re-use (overloading) of existing RFC3261 SIP and UPnP communication messages and on common applications (*e*.*g*., an existing contact book application, an RFC2833-compliant dual-tone multi-frequency (DTMF) application on an SIP communication device or the like) to configure a USRA on a SIP device. No additional protocol features (*e*.*g*., SIMPLE), changes to the SIP specification or new application features are needed, making the overloading transparent to software and hardware. Thus, the invention is extensible to legacy SIP and UPnP devices. However, from an end-user perspective, UPnP applications are now accessible using SIP devices. Moreover, by relaying session services offered by an SIP device to a UPnP network, the invention enables a UPnP device to access the session services, thus facilitating bidirectional internetworking.

FIG. 5 is a flow diagram illustrating one embodiment of a method 500 for registering, locating and invoking a UPnP service (*e*.*g*., in accordance with step 308 of the method 300).

The method 500 is initialized at step 502 and proceeds to step 504, where the software bridge receives a command including a USRA from a SIP device. For example, the command may be a SIP REGISTER command with the "To" field of the RFC3261 SIP header set as "To: JohnPC.StreamMusic@JohnsHome.net".

In step 506, the software bridge identifies the service being requested by the command (*e*.*g*., StreamMusic in the above example) and the UPnP device from which the service is requested (*e*.*g*., JohnPC in the above example), in accordance with the USRA. The domain specified in the USRA tells the software bridge where to route the command.

In step 508, the software bridge maps the requested service to a set (*i*.*e*., one or more) of actions or services. For instance, in the above example, the StreamMusic service requested by the command might map to a series of actions including: (1) "browse" (*e*.*g*., browse the music available at the UPnP device); (2) "select" (*e*.*g*., select an item from the available music); and (3) "play" (*e*.*g*., play the selected item).

In step 510, the software bridge issues one or more commands (in UPnP format) to the identified UPnP device to execute the set of actions or services. The software bridge then receives a response from the identified UPnP device in step 512. For instance, if the software bridge issued a command to the UPnP device to "browse" in step 510, the UPnP device might respond in step 512 with a list of available music.

In step 514, the software bridge provides the requested service to the requestor/SIP device. For instance, the software bridge might provide the list of songs available from the identified UPnP device, so that the requestor may browse the list and make a selection.

The method 500 terminates in step 516.

FIG. 4 is a flow diagram illustrating a more detailed embodiment of a method 400 for bridging Session Initiation Protocol and Universal Plug and Play devices. Like the method 200, the method 400 may be implemented at a software bridge, for example embodied in a residential gateway or at a standalone accessory to an SIP device. The method 400 is specifically directed to enabling a UPnP device to access session-based services offered by an SIP device. Thus, for example, the method 400 may be implemented by a user in order to stream video from a UPnP media server onto an SIP cordless phone, using a UPnP enabled television remote control. Alternatively, the method 400 may be implemented by a user in order to use a SIP device to retrieve content stored on a UPnP media server and stream the retrieved content onto the SIP device.

The method 400 is initialized at step 402 and proceeds to step 404, where the software bridge represents the SIP device to the UPnP network as a "virtual" UPnP audio/visual (AV) renderer device, hosted by the software bridge. That is, the software bridge appears as a UPnP device to the UPnP network. Thus, the "virtual" UPnP renderer is an alias for the SIP device, which represents the SIP device in the UPnP domain (whereas a "real" UPnP device has UPnP software and a UPnP identifier and communicates with the rest of the UPnP network using UPnP protocol). In one embodiment, the software bridge is configured by determining which SIP devices are available to provide services and creating proxies (virtual UPnP devices) for each available SIP device. In accordance with step 402, the "virtual" UPnP renderer advertises its presence on the UPnP network, so that the "virtual" UPnP renderer device is discoverable by legacy UPnP control points. Once the "virtual" UPnP renderer device is discovered, the legacy UPnP control points may involve the "virtual" UPnP renderer device in a session with a legacy UPnP media server.

In step 406, the software bridge maps the UPnP AV renderer operations to SIP messages. For instance, upon discovery by a legacy UPnP control point, the software bridge may map UPnP signaling messages related to session establishment to SIP signaling messages. In further embodiments (*e*.*g*., involving UPnP control point initiated sessions), the UPnP AVT Play message is mapped to a SIP INVITE message, such that a SIP/UPnP session manager component of a bridge may take inputs from the "virtual" UPnP renderer in order to perform mapping operations. In another embodiment (*e*.*g*., involving a SIP device initiated session), a SIP INVITE message is mapped to a set of UPnP actions (*e*.*g*., UPnP CDS Browse, UPnP AVT SetTransport URI, UPnP AVT Play or the like), and the SIP/UPnP session manager component of the software bridge performs the mapping operations. In another embodiment still (*e*.*g*., involving a UPnP control point initiated session), a SIP session is initiated once the "virtual" UPnP renderer completes a download of the media session over hypertext transport protocol (HTTP).

In one embodiment, a UPnP Content Directory Service could be used by using a GetProtocollnfo() message in order to obtain a protocol/format list for an SIP device. In one embodiment, the "virtual" UPnP renderer has SIP to UPnP protocol mapping functionality. In a further embodiment still, the "virtual" UPnP renderer has media transcoding functionality.

The method 400 terminates in step 408.

The method 400 therefore allows devices that cannot normally interact directly (*e*.*g*., UPnP media servers/control points and SIP devices) to interact via a "virtual" UPnP renderer acting on behalf of the SIP device. In further embodiments, the "virtual" UPnP renderer may be placed on the media path. Such placement may support valuable applications, such as the ability to perform real-time transcoding when there is a mismatch in codec abilities between a UPnP media server and a SIP device.

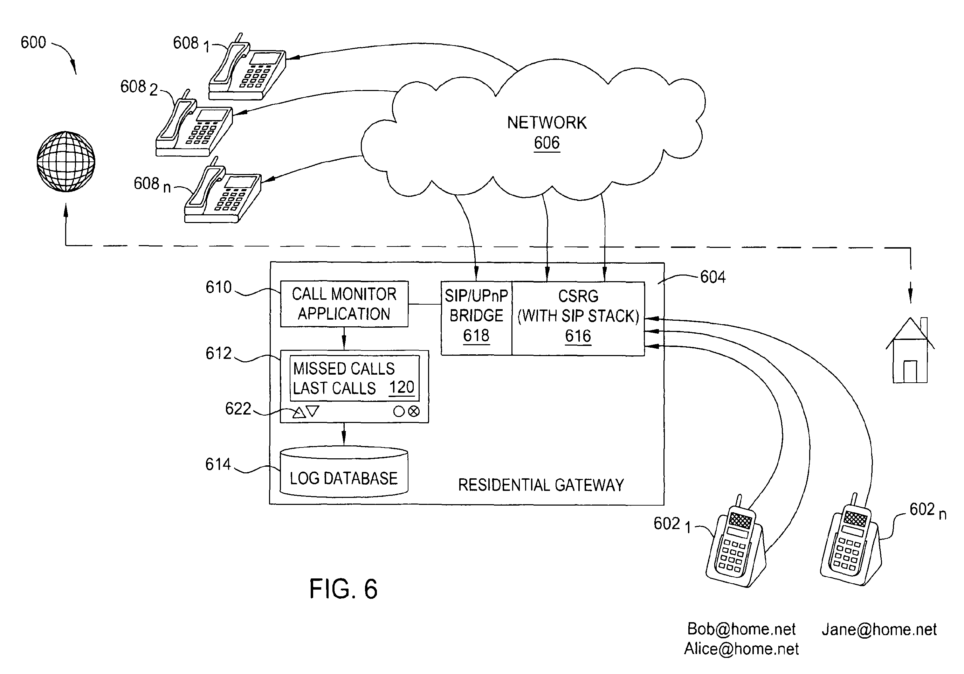

FIG. 6 is a schematic diagram illustrating a first embodiment of a network 600. As illustrated, the network 600 comprises a plurality of home-based communication devices 602₁-602ₙ (hereinafter collectively referred to as "home devices 602") connected via a residential gateway 604 to an outside network 606, such as the Internet. A plurality of external communication devices 608₁-608ₙ (hereinafter collectively referred to as "external devices 608") is further connected to the network 606, and the external devices 608 may communicate with the home devices 602 via the network 606 and residential gateway 604.

In one embodiment, the home devices 602 include a plurality of UPnP and/or SIP devices (*e*.*g*., SIP cordless telephones, UPnP audio/visual servers, etc.). In one embodiment, the external devices 608 include a plurality of SIP devices (*e*.*g*., SIP mobile telephones).

In one embodiment, the residential gateway 604 comprises a converged services residential gateway (CSRG) 616 (including an SIP stack) and a SIP/UPnP software bridge 618. The CSRG 616 is a home gateway/broadband residential gateway that is capable of hosting convergence functions. The CSRG communicates with SIP devices within the home network 600 (*e*.*g*., devices 602₁ and 602ₙ in FIG. 6). The bridge 618 is coupled to the CSRG and routes incoming communications to the appropriate home devices 602. To this end, the bridge 618 transparently bridges the SIP devices (*e*.*g*., home devices 602) and UPnP devices (*e*.*g*., call monitor 612, described in further detail below) within the home network. In one embodiment, the bridge 618 is configured in accordance with the SIP/UPnP software bridge described above. Thus, the residential gateway 604 may be considered an SIP proxy.

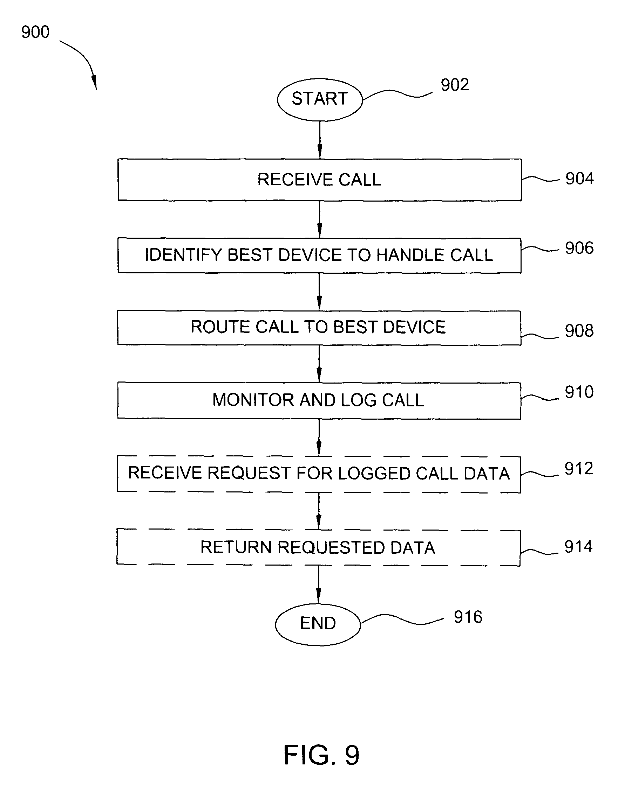

In one embodiment, the residential gateway 604 additionally comprises a call monitor application 610, a call monitor device 612, and a call log database 614. The call monitor application 610 comprises software for monitoring and logging communication sessions terminating in the home network 600, and is described in greater detail with respect to FIG. 9. The call monitor device 612 comprises an interface that allows a user to access the call monitor application 610.

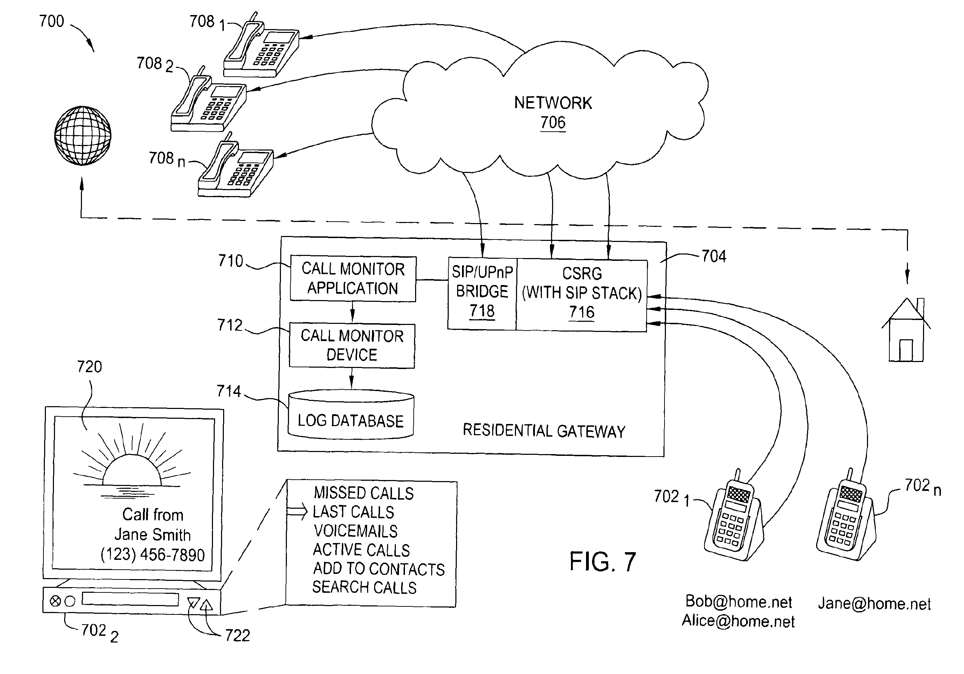

In one embodiment, the call monitor device 612 is a virtual UPnP device. As illustrated, in one embodiment, the interface for the call monitor device 612 comprises a display 620 and controls 622. The display 620 allows a user to browse call options and to view data logged by the call monitor application 610 and stored in the call log database 614. The controls 622 allow the user to control the control the data viewed in the display 620. In one embodiment, the interface for the call monitor device 612 is incorporated in a dedicated device (*e*.*g*., a UPnP universal remote control or a caller ID device). In further embodiments illustrated in FIGs. 7-8, the interface for the call monitor device 612 is an integral component of one of the home devices 602.

In one embodiment, the data stored by the call log database 614 (and viewable by the user) includes, but is not limited to: missed calls terminating in the home network 600, last n calls terminating and/or originating in the network 600, voicemails received by devices in the network 600, and active calls terminating and/or originating in the network 600. Moreover, for each logged call, the call log database 614 records at least one of: the source of the call (origination point), the destination of the call (termination point), the length of the call, or the time that the call occurred. In one embodiment, call options or tasks form which the user may select include, but are not limited to: adding a number (source) from which a call was received to a list of contacts (*e*.*g*., in a shared phone book hosted by the home network or in a phone book of a specific device within the home network), establishing a communication session with a number from which a call was received, searching logged calls, printing a list of logged calls, or playing a voicemail.

FIG. 7 is a schematic diagram illustrating a second embodiment of a network 700. The network 700 is substantially similar to the network 600 illustrated in FIG. 6 and comprises a plurality of home-based communication devices 702₁-702ₙ (hereinafter collectively referred to as "home devices 702") connected via a residential gateway 704 to an outside network 706, such as the Internet. A plurality of external communication devices 708₁-708ₙ (hereinafter collectively referred to as "external devices 708") are further connected to the network 706, and the external devices 708 may communicate with the home devices 702 via the network 706 and residential gateway 704.

In one embodiment, the residential gateway 704 comprises a CSRG 716 (including an SIP stack) and a SIP/UPnP software bridge 718, configured substantially as described above with respect to FIG. 6. In one embodiment, the residential gateway 704 additionally comprises a call monitor application 710, a call monitor device 712, and a call log database 714. The call monitor application 710 and call log database 714 are configured substantially as described above with respect to FIG. 6.

In one embodiment, the call monitor device 712 is a virtual UPnP device. As illustrated, the interface for the call monitor device 712 associated with the network 700 is an integral component of one of the home devices 702 (in the exemplary case of the network 700, a set top box 702₂ and television, as described further below). The interface for the call monitor device 712 comprises a display 720 and controls 722, configured substantially as described above with respect to FIG. 6. In the exemplary use case illustrated in FIG. 7, the controls 722 are located on the set top box 702₂, while the display 720 comprises a television connected to the set top box 702₂. In the exemplary use case, the residential gateway 704 may discover the set top box by UPnP. The residential gateway 704 would then send call to the set top box via UPnP event notifications, and the set top box would provide UPnP announcements to the residential gateway 704. This exemplary use case may be especially useful when a user wishes access the call monitor application 710 while at home.

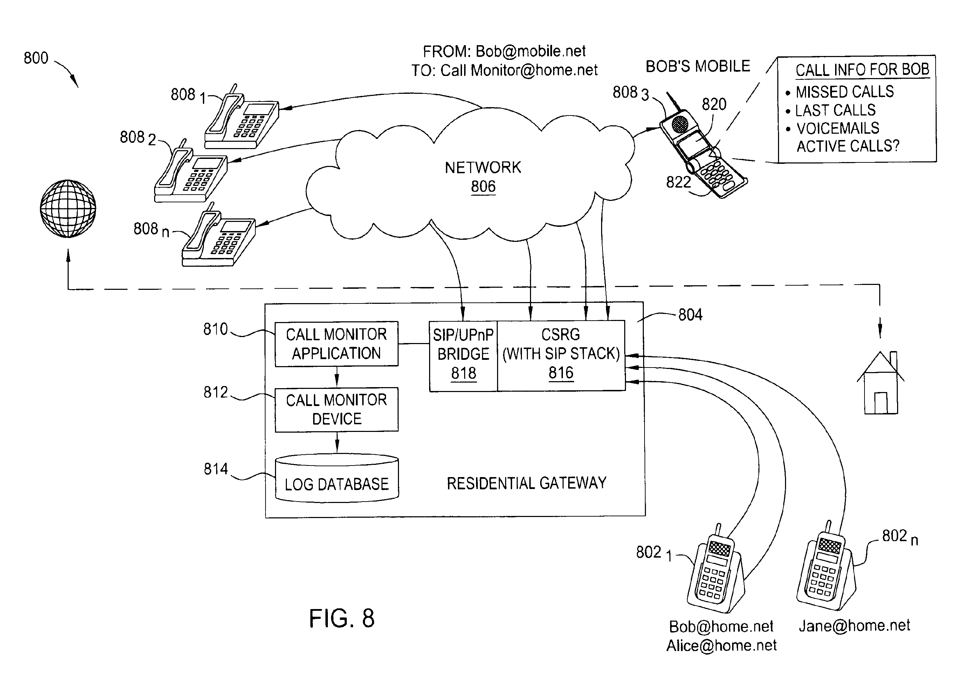

FIG. 8 is a schematic diagram illustrating a third embodiment of a network 800. The network 800 is substantially similar to the network 600 illustrated in FIG. 6 and comprises a plurality of home-based communication devices 802₁-802ₙ (hereinafter collectively referred to as "home devices 802") connected via a residential gateway 804 to an outside network 806, such as the Internet. A plurality of external communication devices 808₁-808ₙ (hereinafter collectively referred to as "external devices 808") is further connected to the network 806, and the external devices 808 may communicate with the home devices 802 via the network 806 and residential gateway 804.

In one embodiment, the residential gateway 804 comprises a CSRG 816 (including an SIP stack) and a SIP/UPnP software bridge 818, configured substantially as described above with respect to FIG. 6. In one embodiment, the residential gateway 804 additionally comprises a call monitor application 810, a call monitor device 812, and a call log database 814. The call monitor application 810 and call log database 814 are configured substantially as described above with respect to FIG. 6.

In one embodiment, the call monitor device 812 is a virtual UPnP device. As illustrated, the interface for the call monitor device 712 associated with the network 700 is an integral component of a remote device (in the exemplary case of the network 800, an SIP mobile telephone 808₃, as described further below). In the exemplary use case illustrated in FIG. 8, the controls 822 are the keypad of the SIP mobile telephone 808₃, while the display 820 comprises the screen of the SIP mobile telephone 808₃.

Thus, the configuration of the network 800 allows the call monitor device to be accessed remotely. This enables a user to access the call monitor application 810 even when away from home.

FIG. 9 is a flow diagram illustrating one embodiment of a method 900 for monitoring and logging communication sessions terminating in a home network. The method 900 may be implemented, for example, at a call monitor device that is part of a residential gateway, such as the call monitor devices described above with respect to FIGs. 6-8.

The method 900 is initialized at step 902 and proceeds to step 904, where the method 900 receives a call. In step 906, the method 900 identifies the best device in the home network to handle the call.

In step 908, the residential gateway routes the call to the device identified in step 904. In one embodiment, routing of the call is performed using a SIP/UPnP software bridge, as described above. Use of the bridge may be necessary, for example, when the call received in step 904 is received from a mobile SIP telephone.

The call monitor device monitors and logs the call (*i*.*e*., creates a call record) in step 910. In one embodiment, the data logged for the call includes at least one of: the source of the call, the destination of the call, the time of the call, or the length of the call. Data logged for the call is stored in a call log database, as described above.

In optional step 912 (illustrated in phantom), the call monitor application receives a request for logged call data. In one embodiment, request is received via a UPnP device or local device in the home network (*e*.*g*., via a UPnP universal remote control or a set top box coupled to a television, as illustrated in FIGs. 6 and 7, respectively). In another embodiment, the request is received via an SIP device or remote device outside of the home network (*e*.*g*., via an SIP mobile telephone, as illustrated in FIG. 8).

In optional step 914 (illustrated in phantom), the method 900 returns the logged call data requested in step 912. In one embodiment, the residential gateway accesses the requested data using the SIP/UPnP software bridge.

The method 900 terminates in step 914.

In further embodiments, the call monitoring and logging application discussed herein may be used to establish a new communication session. For example, a user could select a call record for a previously received call from the call log database and request that a new call be placed to the source of the previously received call. In this case, the call monitor device (*e*.*g*., a UPnP universal remote control, a set top box, an SIP mobile telephone, or the like) would send a signal to the residential gateway requesting that the call be placed, and the residential gateway would establish the call between the source of the previously received call and a device within the home network.

Monitoring and logging communications sessions as described above enables a plurality of communications options, such as allowing a user to view last calls, missed calls, voicemails, and active sessions associated with a home network. The user may also search calls, place calls to stored telephone numbers, answer incoming calls, ignore incoming calls, or send incoming calls to voicemail. Further embodiments of the present invention allow a user to enable or disable the call monitoring and logging features (*e*.*g*., indefinitely or for a specified period of time), to delete records in the call log database, to sort records in the call log database, or to associate nicknames or images with stored telephone numbers.

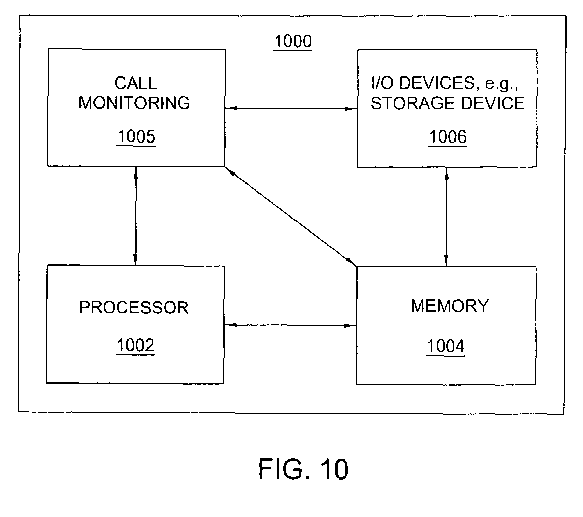

FIG. 10 is a high level block diagram of the present call monitoring and logging application that is implemented using a general purpose computing device 1000, such as a personal computer, a set top box, a residential gateway, a mobile telephone, a personal digital assistant or the like. In one embodiment, a general purpose computing device 1000 comprises a processor 1002, a memory 1004, a call monitoring module 1005 and various input/output (I/O) devices 1006 such as a display, a keyboard, a mouse, a modem, a network connection and the like. In one embodiment, at least one I/O device is a storage device (*e*.*g*., a disk drive, an optical disk drive, a floppy disk drive). It should be understood that the call monitoring module 1005 can be implemented as a physical device or subsystem that is coupled to a processor through a communication channel.

Alternatively, the call monitoring module 1005 can be represented by one or more software applications (or even a combination of software and hardware, *e*.*g*., using Application Specific Integrated Circuits (ASIC)), where the software is loaded from a storage medium (*e*.*g*., I/O devices 1006) and operated by the processor 1002 in the memory 1004 of the general purpose computing device 1000. Additionally, the software may run in a distributed or partitioned fashion on two or more computing devices similar to the general purpose computing device 1000. Thus, in one embodiment, the call monitoring module 1005 for monitoring and logging communications sessions in a home network described herein with reference to the preceding figures can be stored on a computer readable medium or carrier (*e*.*g*., RAM, magnetic or optical drive or diskette, and the like).

It should be noted that although not explicitly specified, one or more steps of the methods described herein may include a storing, displaying and/or outputting step as required for a particular application. In other words, any data, records, fields, and/or intermediate results discussed in the methods can be stored, displayed, and/or outputted to another device as required for a particular application. Furthermore, steps or blocks in the accompanying Figures that recite a determining operation or involve a decision, do not necessarily require that both branches of the determining operation be practiced. In other words, one of the branches of the determining operation can be deemed as an optional step.

While the foregoing is directed to embodiments of the invention, other and further embodiments of the invention may be devised without departing from the basic scope thereof.

## Claims

1. A method for monitoring a communication session within a home network, the method **characterized by** the steps of:
routing (908) the communication session to a device in the home network via a residential gateway, the residential gateway being equipped with Universal Plug and Play and Session Initiation Protocol capabilities; and
storing (910) data related to the communication session in a database coupled to the residential gateway.

2. The method of claim 1, wherein the storing step (910) comprises:
recording, for the communication session, at least one of: a source of the communication session, a destination of the communication session, a length of the communication session, or a time that the communication session occurred.

3. The method of claim 1, further **characterized by** the steps of:
receiving (912) a request to display data related to at least one stored communication session; and
displaying the requested data.

4. The method of claim 3 wherein the requested data is at least one of: at least one missed communication session, a specified number of last communication sessions, at least one voicemail, or at least one active communication session.

5. The method of claim 3, further **characterized by** the step of:
receiving (912) a request to take an action in response to the requested data.

6. The method of claim 5, wherein the requested action is at least one of: establishing a new communication session with a source of at least one stored communication session, adding a source of at least one stored communication session to a list of contacts, playing a voicemail associated with a stored communication session, or printing data related to at least one stored communication session.

7. A computer readable medium containing an executable program for monitoring a communication session within a home network, where the program is **characterized by** performing the method of any of claims 1 to 6.

8. A system for monitoring a communication session within a home network, the system **characterized by**:
a residential gateway (604) equipped with Universal Plug and Play and Session Initiation Protocol capabilities (618), for routing the communication session to a device (602) in the home network; and
a database (614) coupled to the residential gateway, for storing data related to the communication session.

9. The system of claim 8, further **characterized by**:
a user interface (612), for allowing a user to view data stored in the database, the user interface comprising:
a display (620) for displaying the data; and.
one or more controls (622) for allowing the user to control the data that is displayed.

10. The system of claim 9, wherein the user interface is incorporated in a dedicated device coupled to the residential gateway.

11. The system of claim 10, wherein the dedicated device is a Universal Plug and Play-based universal remote control.

12. The system of claim 9, wherein the user interface is incorporated in a device in the home network.

13. The system of claim 12, wherein the user interface is incorporated into a set top box coupled to a television.

14. The system of claim 9, wherein the user interface is incorporated in a remote device that is in communication with the residential gateway.

15. The system of claim 13, wherein the remote device (602) is a Session Initiation Protocol-based mobile telephone.
